# EUROPEAN PATENT SPECIFICATION

(11) **EP 2 887 583 B1**
(45) Date of publication and mention of the grant of the patent: **13.03.2019**
(21) Application number: 13799922.3
(22) Date of filing: 15.07.2013
(51) Int. Cl.: H04L 12/24, H04L 29/08

(54) **SERVICE PROCESSING METHOD AND DEVICE**
DIENSTVERARBEITUNGSVERFAHREN UND -VORRICHTUNG
PROCÉDÉ ET DISPOSITIF DE TRAITEMENT DE SERVICES

(30) Priority: 21.09.2012 CN 201210355345
(43) Date of publication of application: 24.06.2015
(73) Proprietor: ZTE Corporation, Shenzhen, Guangdong 518057 (CN)
(72) Inventor: SUN, Aifang, Shenzhen Guangdong 518057 (CN)
(74) Representative: J A Kemp
(86) International application number: PCT/CN2013/079365
(87) International publication number: WO 2013/182128

(56) References cited:
- CN-A- 101 018 150
- CN-A- 101 567 845
- CN-A- 101 662 742
- US-A1- 2003 086 391

## Description

### Technical Field

The present invention relates to the communication field, and specifically, to a service processing method and device.

### Background of the Related Art

With continuous development of internet environment, the network architecture where multiple heterogeneous networks coexist and converge has been a development tendency of the future network. At present, some typical application scenarios such as intelligent buildings, tri-networks integration and so on are continuously popularized and extended. Under the new network architecture, abundant terminals and devices in various forms for subscribers emerge constantly, and these terminals and devices bring out new function requirement and performance in order to cater to this new network. One terminal subscriber may simultaneously own multiple terminal products in different networks. Taking full advantage of multiple terminals of different subscribers or one subscriber to cooperatively work to provide services for a subscriber can not only take full advantage of network resources and terminal device resources, but also improve the overall experiences of the subscriber.

To meet such a requirement of subscribers, terminals working cooperatively with one another or terminals in different demands are required to support multiple interfaces and even the simultaneous application of multiple interfaces. Wherein, the implementation way of those including multi-interface terminals simultaneously supporting the uploading and downloading of service data and communication between multi-interface terminals comes into being the problem facing currently and have to be solved. Especially in current developing internet and ubiquitous network, under the cooperative architecture with convergence of multiple heterogeneous networks, the cooperative devices in the ubiquitous network can upload services and download services simultaneously, and meanwhile the cooperative devices may be used as cooperative terminals to constitute virtual terminals with other terminals to transmit services, correspondingly, the cooperative devices are also required to support constituting the interfaces between cooperative terminals besides to support the uplink and downlink interfaces.

However, in the process of supporting the application of multiple interfaces, with the quantity and types of supported interfaces increasing, it will increase the processing difficulty and probability of raising conflict, and even result in that the services of some interfaces are hard to deal with. For the problem occurring during multi-interface terminals apply multiple interfaces in related art, there is still no effective solution put forward at present.

Documents, CN101018150A, CN101662742A, CN101567845A and US2003086391A1, have disclosed the related art of the present invention.

### Summary of the Invention

Aiming at the problem occurring during a multi-interface terminal using multiple interfaces, the embodiments of the present invention provide a service processing method and an device, in order to at least solve the above problem.

According the present invention, there are provided a service processing method and a service processing device as defined in the independent claims.

In the embodiments of the present invention, a method that the formats of the service instructions received from multiple interfaces of a terminal are converted uniformly to a format recognizable by the terminal, and the converted service instructions are scheduled according to a preset policy is adopted, thereby the problem occurring when a multi-interface terminal utilizes multiple interfaces in related art is solved, multiple interfaces of the terminal is efficiently used to provide services to subscribers at the same time, and meanwhile the technical support is supplied to cooperative work of multiple terminals to service subscribers.

### Brief Description of Drawings

The accompanying drawings described here are used to provide a further understanding on the present invention, and make up a part of the present application. The schematic embodiments of the present invention and their description are used to explain the present invention, while not used to limit the present invention improperly. In the accompanying drawings:
FIG. 1 is a flowchart of a service processing method according to an embodiment of the present invention;
FIG. 2 is a structural block diagram of a service processing device according to an embodiment of the present invention;
FIG. 3 is preferred structural block diagram 1 of a service processing device according to an embodiment of the present invention;
FIG. 4 is a preferred structural block diagram of a scheduling module according to an embodiment of the present invention;
FIG. 5 is preferred structural block diagram 2 of a service processing device according to an embodiment of the present invention;
FIG. 6 is preferred structural block diagram 3 of a service processing device according to an embodiment of the present invention;
FIG. 7 is an architectural diagram of communication among multi-interface terminals according to a preferred embodiment of the present invention;
FIG. 8 is a structural block diagram of a device service platform meeting communication among multi-interface terminals according to a preferred embodiment of the present invention;
FIG. 9 is a flowchart of implementing a method for communication among multi-interface terminals according to a preferred embodiment of the present invention.

### Preferred Embodiments of the Present Invention

The present invention will be described in detail in the following by referring to accompanying drawings and in combination with embodiments. It should be noted that the embodiments and features in the embodiments of the present application may be combined with one another without conflict.

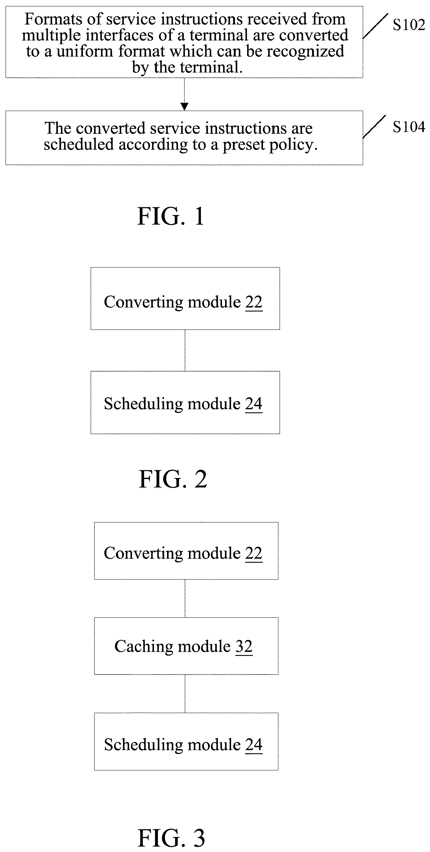

A service processing method is provided in the present embodiment. FIG. 1 is a flowchart of the service processing method according to the embodiment of the present invention. As shown in FIG. 1, the method comprises the following steps.

In step S102, formats of service instructions received from multiple interfaces of a terminal are converted to a uniform format which can be recognized by the terminal;

In step S104, the converted service instructions are scheduled according to a preset policy.

In the present embodiment, according to the above steps, the service instructions received from multiple interfaces of the terminal are converted to be in a uniform format which can be recognized by the terminal, and then the converted service instructions are processed according to a preset policy and scheduling as a whole. As the multiple interfaces of the terminal may be connected to multiple different heterogeneous networks, and the formats of service instructions received from each interface may also be different, great inconvenience is brought to the processing of the terminal. While by converting the received service instructions to be in a uniform format which can be recognized by the terminal, and then performing the processing, the service processing efficiency of the terminal is improved. Moreover, the converted service instructions are also scheduled according to a preset policy, thereby the case in which conflict resulting from simultaneous requirement for some system resources by multiple interfaces and even the system corruption are avoided, the system stability of the multi-interface terminal is improved, the problem occurring during multi-interface terminals apply multiple interfaces in the related art is solved, the multiple interfaces of the terminal are applied effectively to simultaneously provide services to subscribers, and technical support is provided to the cooperative work by multiple terminals in serving subscribers.

As a preferred embodiment, the converted service instructions may be cached. By this way, it further avoids conflict of service instructions from multiple interfaces.

Preferably, the above preset policy may be scheduling the converted service instructions according to a preset priority sequence; and/or adapting the converted service instructions to interfaces in corresponding interface type for processing.

Preferably, the above priority sequence may be set according to network loading condition, and/or the time when the service instructions need to use the interface.

For instance, in the case that the service data corresponding to a service instruction are stored locally in the terminal, it may set that the priority level of this service instruction is higher than that of other service instructions. While in the case that none of all the service data corresponding to the service instructions is stored locally in the terminal, it may set that the higher the communication speed of an interface is, the higher the priority level of the service instruction corresponding to the interface is, for instance, it may set that the priority level of the service instruction from the terminal is higher than that of the cooperative service instruction from other terminals. By this way, it can have the service instructions which can be processed in a higher speed preferentially processed, thereby the unprocessed service instructions in the terminal are decreased as much as possible and the processing efficiency of the service instructions is improved.

Preferably, after the service instructions that are converted to be in a uniform format are processed, the format of the service instructions whose formats have been converted may be converted again to a corresponding format in which the interface corresponding to the service instructions communicate externally, and the service instructions can be sent out from this interface. By this way, it makes the format conversion of the multi-interface terminal transparent externally, so that the external networks are not required to know in which format the multi-interface terminal is converted to be, but just perform communication in the format thereof.

Preferably, after the converted service instructions are scheduled according to a preset policy, the service data corresponding to the processed service instructions may be stored. By this way, when other interfaces need the same service data, it directly acquires the service data locally from the multi-interface terminal with no need of the above acquirement, thereby enhancing the processing efficiency.

Corresponding to the above method, the present embodiment also provides a service processing device, which is applied to implement the above embodiments and preferred embodiments. What has been described is not to be described again. For example, the term "module" used below may be implemented by a combination of software and/or hardware with preset functions. Although the device described in the following embodiment is preferably implemented in software, the implementation in hardware or the combination of software and hardware may also be conceived.

FIG. 2 is a structural block diagram of a service processing device according an embodiment of the present invention. As shown in FIG. 2, the device comprises: a converting module 22 and a scheduling module 24. Each module is described in detail below.

The converting module 22 is configured to convert formats of service instructions received from multiple interfaces of a terminal to a uniform format recognizable by the terminal; the scheduling module 24 is connected with the converting module 22, and is configured to schedule the converted service instructions according to a preset policy.

In the present embodiment, the above modules are applied. Firstly, the converting module 22 converts the service instructions received from the multiple interfaces of the terminal to be in a uniform format recognizable by the terminal; secondly, the scheduling module 24 schedules as a whole the converted service instructions according to a preset policy. As the multiple interfaces of the terminal may be connected to multiple different heterogeneous networks, the formats of the service instructions received by each interface may be different from one another, which can bring great inconvenience to the processing of the terminal; while by converting the received service instructions to be in a uniform format recognizable by the terminal, and then performing the processing, the service processing efficiency of the terminal is improved; moreover, the converted service instructions are also scheduled according to a preset policy, thereby the case in which conflict resulting from simultaneous requirement for some system resources by multiple interfaces and even the system corruption are avoided, the system stability of the multi-interface terminal is improved, the problem occurring during multi-interface terminals apply multiple interfaces in the related art is solved, the multiple interfaces of the terminal are applied effectively to simultaneously provide services to subscribers, and technical support is provided to the cooperative work by multiple terminals in serving subscribers.

FIG. 3 is a preferred structural block diagram 1 of a service processing device according to an embodiment of the present invention. As shown in FIG. 3, the device further comprises: a caching module 32, connected with the converting module 22 and the scheduling module 24, and configured to cache the converted service instructions.

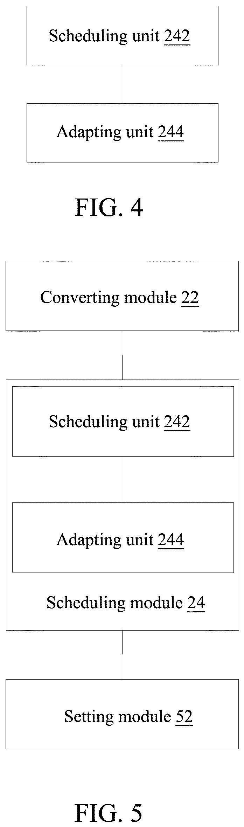

FIG. 4 is a preferred block diagram of the scheduling module 24 according to an embodiment of the present invention. As shown in FIG. 4, the scheduling module 24 may comprise: a scheduling unit 242, configured to schedule the converted service instruction according to a preset priority sequence; and/or an adapting unit 244, configured to adapt the converted service instructions to an interface in a corresponding interface type for processing.

FIG. 5 is a preferred block diagram 2 of a service processing device according to an embodiment of the present invention. As shown in FIG. 5, the device may further comprise: a setting module 52, connected with the scheduling module, and configured to set a priority sequence according to network loading condition and/or time when the interfaces are required to use for the service instructions.

Preferably, the converting module 22 may be further configured to converting the format of the converted service instructions to corresponding formats in which the interfaces communicate externally.

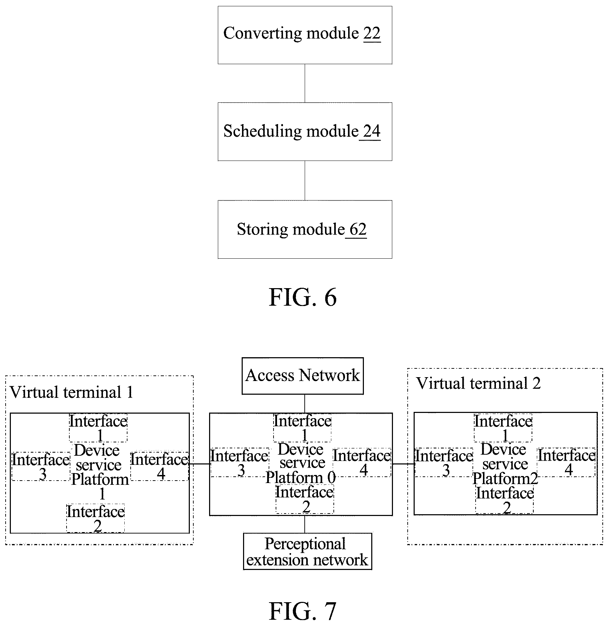

FIG. 6 is a preferred structural block diagram 3 of a service processing device according to an embodiment of the present invention. As shown in FIG. 6, the device may further comprise: a storing module 62, connected with a scheduling module 24, and configured to store service data corresponding to processing of the service instructions.

The following is described in combination with preferred embodiments. The following preferred embodiments are combined with the above embodiments and the preferred embodiments thereof.

In the present preferred embodiment, a method for communication among multi-interface terminals is provided to meet that multiple terminals of a subscriber or terminals of multiple subscribers are fully used under multiple heterogeneous network architecture, multi-interface terminals communicate with one another and exchange information to realize the cooperative work among multi-interface terminals and further fully use the wireless resources. The method is particularly applicable to cooperative service transmission performed by multi-interface terminals in a network architecture where multiple heterogeneous networks coexist. The method implements management, scheduling and application of multiple interfaces in multi-interface terminals by embedding a device service platform in the subscriber terminals and devices, so that the multi-interface terminals can utilize effectively the multiple interfaces of the terminals to transmit services, and provide services to different subscribers, which is also a precondition that the multiple terminals of the subscriber work cooperatively to serve subscribers.

FIG. 7 is an architectural diagram of communication among multi-interface terminals according to a preferred embodiment of the present invention. As shown in FIG. 7, the architectural diagram comprises: an access network, a device service platform and a part of perceptional extension network.

Wherein, the access network means the ubiquitous network, the access network part of the network layer in architecture of internet of things. The network access types include but are not limited to 2G mobile communication, 3G mobile communication and future wireless network, xDSL, FTTx, satellite/microwave, Ethenet, and WiFi etc..

The perceptional extension network refers to the ubiquitous network, a part of perceptional extension network in architecture of internet of things, the network includes but is not limited to sensor network, office field network, internet of vehicles, and personal field network etc..

The device service platform is responsible for input and output services of multi-interface terminals, and interface 1, interface 2, interface 3 and interface 4 of the device service platform are taken as an example in the preferred embodiment for description, where the multiple interfaces can be utilized synchronously or asynchronously;. The device service platform does not only complete the upload and download of services, but also may be used as a cooperative terminal to constitute a virtual terminal with other terminals to transmit services cooperatively. Preferably, the virtual terminal is a temporary group constituted by more than one terminal devices provided to complete the services. Preferably, the device service platform 0 may be used as a cooperative terminal to be utilized by virtual terminal 1 and virtual terminal 2.

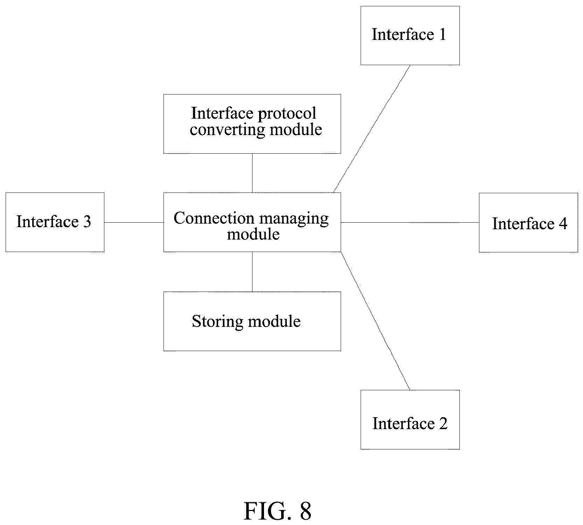

FIG. 8 is a structural block diagram of a device service platform meeting communication among multi-interface terminals according to a preferred embodiment of the present invention. As shown in FIG. 8, the structure of the device service platform may comprise interfaces, connection managing module, interface protocol converting module and a storage module.

Wherein, the interfaces are interfaces for communication externally by multi-interface terminals, and interface 1, interface 2, interface 3 and interface 4 are taken as an example in the preferred embodiment to for description.

Wherein, the connection managing module (implementing the function of the above scheduling module 24) is responsible for uniformly scheduling each interface according to the requirement of services of subscribers, making a choice of interfaces and managing the interfaces, which include but are not limited to scheduling according to the network loading condition and the time when the interfaces need to use for subscriber services, and adaptive scheduling according to the interface types required by services.

Wherein, the interface protocol converting module (implementing the function of the above converting module 22) is responsible for converting the external different protocols to a uniform protocol format inside the multi-interface terminal, in order to be compatible to communication protocols of multiple heterogeneous networks and complete transmission of services.

Wherein, the storage module (implementing the functions of the above buffering module 32 and the storing module 62) is responsible for buffering of the service data, which includes service buffering among cooperative terminals, buffering of input and output services such as uploading and downloading and so on by multi-interface terminals.

In the method for communication among multi-interface terminals provided by the present preferred embodiment, the connection managing module in the device service platform in the multi-interface terminal is used to uniformly schedule, manage and order by priority level the multiple interfaces, the multiple interfaces of the terminal are used according to different service requests and storage condition of service data in the storage module, and meanwhile are converted by interface protocol conversion module to a uniform protocol format data to be stored in the device service platform for other subscribers to use them as required; for multiple interfaces utilized synchronously, concurrent processing method is adopted to implement service transmission.

The communication method among multi-interface terminals in the present preferred embodiment can not only solve the problem of intercommunication among multi-interface terminals in multiple heterogeneous networks in the condition of convergence of multiple heterogeneous networks to implement intercommunication and information exchange among multi-subscriber terminals and multiple terminals of a subscriber, but also may provide a precondition for cooperative work by multiple terminals.

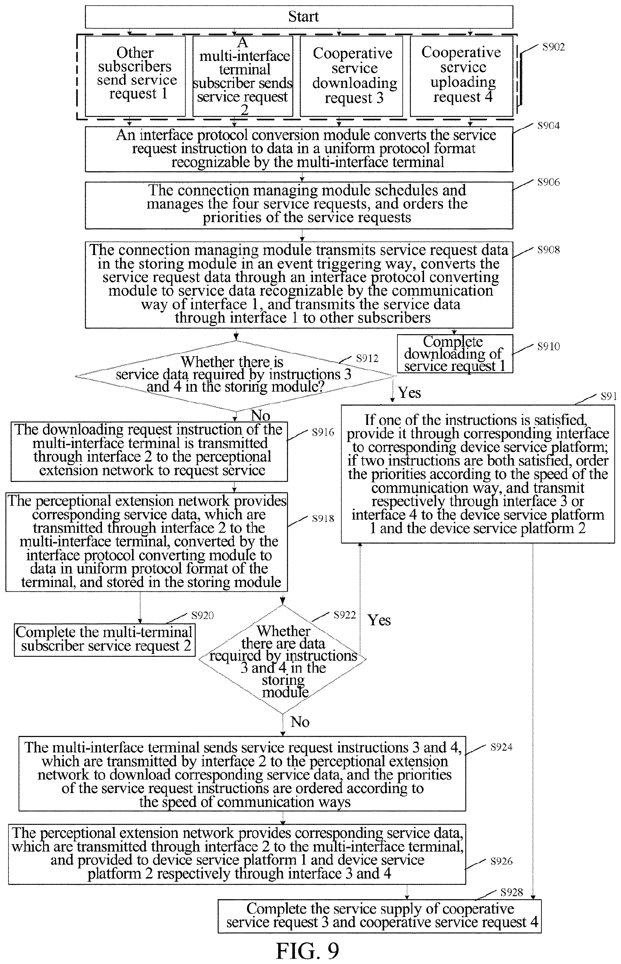

FIG. 9 is a flowchart of implementing a method for communication among multi-interface terminals according to a preferred embodiment of the present invention. A multi-interface terminal performing operation on service content is taken as an example below, the flow of implementing the method for communication among multi-interface terminals is described in detail in the case that the multi-interface terminal is used as a cooperative terminal in the virtual terminal to perform cooperative transmission on the services in the meanwhile of meeting the requirement of uploading and downloading services of the subscriber.

A multi-interface terminal subscriber is to detect security condition of a mining area, and is also required to upload the history record of detecting condition of the mining area to other subscribers, and meanwhile, the multi-interface terminal of the subscriber is requested to be a cooperative terminal to be added to virtual terminal 1 and virtual terminal 2, as shown in FIG. 9, the implementation steps are as follows.

In step S902, the multi-interface terminal subscriber receives service request 1 of uploading history record of detecting condition of the mining area sent by other subscribers, and meanwhile, the subscriber sends out service request 2 for detecting security condition of the mining area; and the subscriber receives a cooperative service downloading request 3 from virtual terminal 1 and a cooperative service uploading request 4 from virtual terminal 2;

In step S904, the multi-interface terminal receives through interface 1 the service request instruction 1 sent by other subscribers, the subscriber receives through interface 3 the cooperative service downloading request instruction 3 sent by the virtual terminal 1, where the service request instruction 1 and the service downloading request instruction 3 are respectively analyzed and converted by an interface protocol conversion module to data in a uniform protocol format of the multi-interface terminal.

In step S906, the protocol converted service request instruction 1, the cooperative service downloading request instruction 3, the service request instruction 2 and the cooperative service uploading request instruction 4 are sent to the connection managing module of the multi-interface terminal at the same time. After receiving the above four instructions, the connection managing module orders the priority levels of the instructions by analysis, recognition and determination, which includes but is not limited to firstly processing the service request instruction of which the required service data are already in the storing module, that is processing the service request downloading service instruction 1; for instructions 2, 3 and 4, if there are no required service data in the storing module, then firstly, process the service downloading request instruction 2 of the multiple terminals, secondly, it chooses, including but not limited to choose the interface with faster communication way to be in higher priority level according to interface 3 and the communication way of interface 3, and lastly, process the service request instructions required by an interface with lower communication way.

In step S908, at first, enter step S910 to process the service data corresponding to the service request instruction 1 which already exist in the storing module, and the service data are uploaded to other subscribers after being converted by the interface protocol converting module to be in a service data format required by interface 1, and then enter step S912.

In step S910, complete the service supply of service request 1, and end the service 1.

In step S912, the connection managing module determines whether there is service required by instruction 3 and instruction 4 in the storing module, if yes, enter step S914, otherwise, enter step S916.

In step S914, if there is a service requirement that can satisfy one of the instructions, transmit corresponding service data through interface 3 or interface 4 to the device service platform 1 or device service platform 2; if two instructions are all satisfied, order the priority levels of the two interfaces according to the communication way in which interface 3 and interface 4 are connected, which includes but is not limited to the interface in higher communication speed being in higher priority level, and after being ordered, the service data are transmitted through interface 3 or interface 4 to the device service platform 1 or the device service platform 2; wherein, when the service data are transmitted to the virtual terminals 1 and 2, the service data are firstly converted by the interface protocol converting module to protocol data recognizable by interface 3 and interface 4, and then are transmitted, afterwards, enter step S928.

In step S916, if there is no service data required by instruction 3 and instruction 4 in the storing module, then the downloading service request 2 of the multi-interface terminal is transmitted through interface 2 to perceptional extension network.

In step S918, the perceptional extension network enters step S920 at first, corresponding service data are provided, which are transmitted through interface 2 to the multi-interface service terminal, and are converted by the interface protocol converting module to data in a uniform protocol format recognizable by multi-interface terminals, and stored in storing module, afterwards, it enters to step S922.

In step S920, complete the downloading of the request service 2 of multi-terminal subscribers, and finish service 2.

In step S922, determine whether the service data in the storing module satisfy the request instruction 3 and instruction 4, if yes or if the service data can satisfy the service requirement of one of the instructions, enter step S914 and repeat corresponding steps, otherwise enter step S924.

In step S924, download corresponding services through interface 2 respectively: including but being not limited to order the priority levels of the two interfaces according to the communication way of connection between interfaces 3 and 4, including but being not limited to the interface with fast communication speed being in higher priority level. After the priority levels are ordered, perform service downloading.

In step S926, the downloaded services are transmitted to the multi-interface service terminal through interface 2, and converted by the interface protocol converting module to data in protocol data format recognizable by interfaces 3 and 4, and then are transmitted to device service platform 1 and device service platform 2.

In step S928, complete the cooperative service downloading request 3 of virtual terminal 1 and the cooperative service uploading request 4 of virtual terminal 2, and finish service 3 and service 4.

Although the multiple interfaces in the multi-interface terminal are ordered by priority level by connection managing module at initiation of utilization, the possibility of simultaneous utilization of the multiple interfaces exists as the amounts of the service data are different during transmission, and the modes of networks connected by multiple interfaces may include multiple heterogeneous networks, so in present preferred embodiment, the multi-mode multi-connection way is adopted, and the processing is performed by simultaneous transmission; this content is the related art, it is not repeated here.

By applying the method for communication among multi-interface terminals provided by the present preferred embodiment, it not only can fully take advantage of the multiple interfaces of the terminal to utilize them simultaneously for service transmission, but also can implement intercommunication among terminals supporting multiple interfaces in the convergence of multiple heterogeneous networks, providing a better solution for constituting internet of things and ubiquitous network architecture. Meanwhile, it can be better to implement a solution of multi-interface terminals working cooperatively, and creates a better precondition for multiple terminals to work cooperatively. In the present preferred embodiment, the interface protocol converting module in the device service platform is used to implement heterogeneous network resources with different compatibility, and a simultaneous method is applied to implement the synchronous transmission of services, thereby the development of a newly converged network has been better utilized.

In another embodiment, software is further provided, which is used to execute the technical solution described in the above embodiments and the preferred embodiments.

In another embodiment, storage media are further provided, on which the above software is stored, and the storage media include but is not limited to optical disk, soft disk, hard disk, and re-erase and re-write storage and so on.

Obviously, the technical persons in the related art should understand, various modules or steps of the present invention described above may be implemented by common computing devices, which may be gathered on a single computing device, or distributed on a network made up with multiple computing devices; optionally, they may be implemented by computer device executable program codes, thereby, they may be stored in storage devices and executed by computing devices, and in some conditions, the steps shown or described here may be executed in sequence different from that described here, or they are made into various integrated circuit modules, or a plurality of modules or steps among them are made into single integrated circuit module for implementation. Thus, the present invention is not limited to any specific combination of hardware and software.

The above description is merely the preferred embodiments of the present invention, while not used to limit the present invention. For those skilled in related art, the present invention may have various alternations and changes. Any modification, equivalent replacement, improvement and so on should all fall into the protection scope of the present invention.

### Industrial Applicability

In the embodiments of the present invention, a method that the formats of the service instructions received from multiple interfaces of a terminal are converted uniformly to a format recognizable by the terminal, and the converted service instructions are scheduled according to a preset policy is adopted, thereby the problem occurring during the usage of multiple interfaces by a multi-interface terminal in related art is solved, multiple interfaces of the terminal is efficiently used to provide services to subscribers at the same time, and meanwhile the technical support is supplied to cooperative work of multiple terminals to service subscribers.

## Claims

1. A service processing method, comprising:
converting (S102) formats of service instructions ; and
scheduling (S104) the converted service instructions according to a preset policy;
**characterised in that** the service instructions are received from multiple interfaces of a terminal and converted to a uniform format recognizable by the terminal
the step of scheduling the converted service instructions according to a preset policy comprises: scheduling the converted service instructions according to a preset priority sequence; and
before the step of scheduling the converted service instructions according to a preset priority sequence, the method further comprises: setting the priority sequence according to network loading condition, and/or time when the interfaces are required to be used for the service instructions.

2. The method according to claim 1, before the step of scheduling the converted service instructions according to a preset policy, further comprising:
caching the converted service instructions.

3. The method according to claim 1, wherein, the step of setting the priority sequence according to network loading condition, and/or time when the interfaces are required to be used for the service instructions comprises:
setting a priority level of the service instruction, for which instruction corresponding service data are stored locally in the terminal, to be higher than the priority level of other service instructions.

4. The method according to claim 3, wherein, the step of setting the priority sequence according to network loading condition, and/or time when the interfaces are required to use for the service instructions further comprises:
setting the service instruction corresponding to the interface in a higher communication speed in a higher priority level when none of the service data corresponding to the service instructions is stored in the locality of the terminal;
preferably, wherein, setting the service instruction corresponding to the interface in a higher communication speed in a higher priority level comprises: setting the priority level of the service instruction from the terminal being higher than the priority level of a cooperative service instruction from other terminals.

5. The method according to any one of claims 1-4, after the step of adapting the converted service instructions to interfaces in corresponding interface type for processing, further comprising:
converting the format of the converted service instructions to a corresponding format in which the interface communicates externally.

6. The method according to any one of claims 1-5, after the step of scheduling the converted service instructions according to a preset policy, further comprising:
storing the service data corresponding to processing of the service instructions.

7. A service processing device, comprising:
a converting module (22), configured to convert formats of service instructions ; and
a scheduling module (24), configured to schedule the converted service instructions according to a preset policy;
**characterised in that** the service instructions are received from multiple interfaces of a terminal and the converting module is configured to convert the formats to a uniform format recognizable by the terminal,
the scheduling module (24) comprises a scheduling unit (242), configured to schedule the converted service instructions according to a preset priority sequence; and
the device further comprises: a setting module (52), connected with the scheduling module, and configured to set the priority sequence according to network loading condition and/or time when the interfaces are required to be used for the service instructions.

8. The device according to claim 7, the device further comprising: a caching module (32) connected with the converting module and the scheduling module, configured to cache the converted service instructions.

9. The device according to claim 7 or 8, wherein,
the setting module (52) being configured to set a priority sequence according to network loading condition and/or time when the interfaces are required to use for the service instructions comprises: setting a priority level of the service instruction, for which instruction corresponding service data are stored locally in the terminal, to be higher than the priority level of other service instructions.

10. The device according to claim 9, wherein, the converting module (22) is further configured to convert the format of the converted service instructions to a corresponding format in which the interface communicates externally.

11. The device according to any one of claims 7-10, wherein, the device further comprises: a storing module (62) connected with the scheduling module, configured to store the service data corresponding to processing of the service instructions.

12. A computer program, comprising program instructions, wherein, when the program instructions are executed by a service processing device, the service processing device execute the method according to any one of claims 1-6.

13. A carrier carrying the computer program according to claim 12.

14. The device according to claim 9, wherein, the setting module being configured to set a priority sequence according to network loading condition and/or time when the interfaces are required to use for the service instructions further comprises: setting the service instruction corresponding to the interface in a higher communication speed in a higher priority level when none of the service data corresponding to the service instructions is stored in the locality of the terminal.

15. The device according to claim 14, wherein, the setting module being configured to set the service instruction corresponding to the interface in a higher communication speed in a higher priority level comprises: setting the priority level of the service instruction from the terminal being higher than the priority level of a cooperative service instruction from other terminals.

## Patentansprüche

1. Dienstverarbeitungsverfahren, umfassend:
Konvertieren (S102) von Formaten von Dienstanweisungen; und
Planen (S104) der konvertierten Dienstanweisungen gemäß einer vorgegebenen Richtlinie;
**dadurch gekennzeichnet, dass** die Dienstanweisungen von mehreren Schnittstellen eines Endgeräts empfangen werden und in ein einheitliches Format konvertiert werden, das durch das Endgerät erkennbar ist
wobei der Schritt des Planens der konvertierten Dienstanweisungen gemäß einer vorgegebenen Richtlinie Folgendes umfasst: Planen der konvertierten Dienstanweisungen gemäß einer vorgegebenen Prioritätenfolge; und
vor dem Schritt des Planens der konvertierten Dienstanweisungen gemäß einer vorgegebenen Prioritätenfolge umfasst das Verfahren ferner Folgendes: Festlegen der Prioritätenfolge gemäß einem Netzwerkbelastungszustand und/oder der Zeit, wenn erfordert ist, dass die Schnittstellen für die Dienstanweisungen verwendet werden.

2. Verfahren nach Anspruch 1, vor dem Schritt des Planens der konvertierten Dienstanweisungen gemäß einer vorgegebenen Richtlinie, ferner umfassend:
Zwischenspeichern der konvertierten Dienstanweisungen.

3. Verfahren nach Anspruch 1, wobei der Schritt des Festlegens der Prioritätenfolge gemäß einem Netzwerkbelastungszustand und/oder der Zeit, wenn erfordert ist, dass die Schnittstellen für die Dienstanweisungen verwendet werden, Folgendes umfasst:
Festlegen einer Prioritätsstufe der Dienstanweisung, wobei für diese Anweisung entsprechende Dienstdaten lokal in dem Endgerät gespeichert sind, sodass sie höher als die Prioritätsstufe von anderen Dienstanweisungen ist.

4. Verfahren nach Anspruch 3, wobei der Schritt des Festlegens der Prioritätenfolge gemäß einem Netzwerkbelastungszustand und/oder der Zeit, wenn erfordert ist, dass die Schnittstellen für die Dienstanweisungen verwendet werden, ferner Folgendes umfasst:
Festlegen der Dienstanweisung, die der Schnittstelle in einer höheren Kommunikationsgeschwindigkeit auf einer höheren Prioritätsstufe zugehörig ist, wenn keine der Dienstdaten, die den Dienstanweisungen zugehörig sind, in der Umgebung des Endgeräts gespeichert sind;
bevorzugt wobei das Festlegen der Dienstanweisung, die der Schnittstelle in einer höheren Kommunikationsgeschwindigkeit auf einer höheren Prioritätsstufe zugehörig ist, Folgendes umfasst: Festlegen der Prioritätsstufe der Dienstanweisung von dem Endgerät als höher als die Prioritätsstufe einer zusammenwirkenden Dienstanweisung von anderen Endgeräten.

5. Verfahren nach einem der Ansprüche 1-4 nach dem Schritt des Anpassens der konvertierten Dienstanweisungen an Schnittstellen eines entsprechenden Schnittstellen-Typs zum Verarbeiten, ferner umfassend:
Konvertieren des Formats der konvertierten Dienstanweisungen in ein entsprechendes Format, in dem die Schnittstelle extern kommuniziert.

6. Verfahren nach einem der Ansprüche 1-5 nach dem Schritt des Planens der konvertierten Dienstanweisungen gemäß einer vorgegebenen Richtlinie, ferner umfassend:
Speichern der Dienstdaten, die dem Verarbeiten der Dienstanweisungen zugehörig sind.

7. Dienstverarbeitungsvorrichtung, umfassend:
ein Konvertierungsmodul (22), das konfiguriert ist, um Formate von Dienstanweisungen zu konvertieren; und
ein Planungsmodul (24), das konfiguriert ist, um die konvertierten Dienstanweisungen gemäß einer vorgegebenen Richtlinie zu planen;
**dadurch gekennzeichnet, dass** die Dienstanweisungen von mehreren Schnittstellen eines Endgeräts empfangen werden und dass das Konvertierungsmodul konfiguriert ist, um die Formate in ein einheitliches Format zu konvertieren, das durch das Endgerät erkennbar ist,
wobei das Planungsmodul (24) eine Planungseinheit (242) umfasst, die konfiguriert ist, um die konvertierten Dienstanweisungen gemäß einer vorgegebenen Prioritätenfolge zu planen; und
wobei die Vorrichtung ferner Folgendes umfasst: ein Festlegungsmodul (52), das mit dem Planungsmodul verbunden ist und konfiguriert ist, um die Prioritätenfolge gemäß dem Netzwerkbelastungszustand und/oder der Zeit, wenn erfordert ist, dass die Schnittstellen für die Dienstanweisungen verwendet werden, festzulegen.

8. Vorrichtung nach Anspruch 7, wobei die Vorrichtung ferner Folgendes umfasst: ein Zwischenspeichermodul (32), das mit dem Konvertierungsmodul und dem Planungsmodul verbunden ist, das konfiguriert ist, um die konvertierten Dienstanweisungen zwischenzuspeichern.

9. Vorrichtung nach Anspruch 7 oder 8, wobei
das Festlegungsmodul (52), das konfiguriert ist, um eine Prioritätenfolge gemäß dem Netzwerkbelastungszustand und/oder der Zeit, wenn erfordert ist, dass die Schnittstellen für die Dienstanweisungen verwendet werden, festzulegen, Folgendes umfasst: Festlegen einer Prioritätsstufe der Dienstanweisung, wobei für diese Anweisung entsprechende Dienstdaten lokal in dem Endgerät gespeichert sind, sodass sie höher als die Prioritätsstufe von anderen Dienstanweisungen ist.

10. Vorrichtung nach Anspruch 9, wobei das Konvertierungsmodul (22) ferner konfiguriert ist, um das Format der konvertierten Dienstanweisungen in ein entsprechendes Format zu konvertieren, in dem die Schnittstelle extern kommuniziert.

11. Vorrichtung nach einem der Ansprüche 7-10, wobei die Vorrichtung ferner Folgendes umfasst:
ein Speichermodul (62), das mit dem Planungsmodul verbunden ist, das konfiguriert ist, um die Dienstdaten, die dem Verarbeiten der Dienstanweisungen zugehörig sind, zu speichern.

12. Computerprogramm, umfassend Programmanweisungen, wobei, wenn die Programmanweisungen durch eine Dienstverarbeitungsvorrichtung ausgeführt werden, die Dienstverarbeitungsvorrichtung das Verfahren gemäß einem der Ansprüche 1-6 ausführt.

13. Träger, der das Computerprogramm nach Anspruch 12 trägt.

14. Vorrichtung nach Anspruch 9, wobei das Festlegungsmodul, das konfiguriert ist, um eine Prioritätenfolge gemäß dem Netzwerkbelastungszustand und/oder der Zeit, wenn erfordert ist, dass die Schnittstellen für die Dienstanweisungen verwendet werden, festzulegen, Folgendes umfasst: Festlegen der Dienstanweisung, die der Schnittstelle in einer höheren Kommunikationsgeschwindigkeit auf einer höheren Prioritätsstufe zugehörig ist, wenn keine der Dienstdaten, die den Dienstanweisungen zugehörig sind, in der Umgebung des Endgeräts gespeichert sind.

15. Vorrichtung nach Anspruch 14, wobei das Festlegungsmodul, das konfiguriert ist, um die Dienstanweisung, die der Schnittstelle in einer höheren Kommunikationsgeschwindigkeit auf einer höheren Prioritätsstufe zugehörig ist, festzulegen, Folgendes umfasst: Festlegen der Prioritätsstufe der Dienstanweisung von dem Endgerät als höher als die Prioritätsstufe einer zusammenwirkenden Dienstanweisung von anderen Endgeräten.

## Revendications

1. Procédé de traitement de services, comprenant :
la conversion (S102) de formats d'instructions de service ; et
la planification (S104) des instructions de service converties en fonction d'une politique prédéfinie ;
**caractérisé en ce que** les instructions de service sont reçues depuis de multiples interfaces d'un terminal et converties en un format uniforme reconnaissable par le terminal
l'étape de planification des instructions de service converties en fonction d'une politique prédéfinie comprend : la planification des instructions de service converties en fonction d'une séquence de priorité prédéfinie ; et
avant l'étape de planification les instructions de service converties en fonction d'une séquence de priorité prédéfinie, le procédé comprend en outre : la définition de la séquence de priorité en fonction d'une condition de chargement de réseau, et/ou d'un moment où les interfaces doivent être utilisées pour les instructions de service.

2. Procédé selon la revendication 1, avant l'étape de planification des instructions de service converties en fonction d'une politique prédéfinie, comprenant en outre : la mise en antémémoire des instructions de service converties.

3. Procédé selon la revendication 1, dans lequel l'étape de définition de la séquence de priorité en fonction d'une condition de chargement de réseau, et/ou d'un moment où les interfaces doivent être utilisées pour les instructions de service comprend :
la définition d'un niveau de priorité de l'instruction de service, pour laquelle l'instruction correspondant à des données de service est stockée localement dans le terminal, pour être supérieur au niveau de priorité d'autres instructions de service.

4. Procédé selon la revendication 3, dans lequel l'étape de définition de la séquence de priorité en fonction d'une condition de chargement de réseau, et/ou d'un moment où les interfaces doivent être utilisées pour les instructions de service comprend en outre :
la définition de l'instruction de service correspondant à l'interface à une vitesse de communication supérieure, à un niveau de priorité supérieur lorsqu'aucune des données de service correspondant aux instructions de service n'est stockée dans la zone du terminal ;
de préférence, dans lequel la définition de l'instruction de service correspondant à l'interface à une vitesse de communication supérieure, à un niveau de priorité supérieur comprend : la définition du niveau de priorité de l'instruction de service provenant du terminal comme étant supérieur au niveau de priorité d'une instruction de service coopérative provenant d'autres terminaux.

5. Procédé selon l'une quelconque des revendications 1 à 4, après l'étape d'adaptation des instructions de service converties à des interfaces dans le type d'interface correspondante pour le traitement, comprenant en outre :
la conversion du format des instructions de service converties en un format correspondant dans lequel l'interface communique en externe.

6. Procédé selon l'une quelconque des revendications 1 à 5, après l'étape de planification des instructions de service converties en fonction d'une politique prédéfinie, comprenant en outre :
le stockage des données de service correspondant au traitement des instructions de service.

7. Dispositif de traitement de services, comprenant :
un module de conversion (22), conçu pour convertir des formats d'instructions de service ; et
un module de planification (24), conçu pour planifier les instructions de service converties en fonction d'une politique prédéfinie ;
**caractérisé en ce que** les instructions de service sont reçues depuis de multiples interfaces d'un terminal et le module de conversion est conçu pour convertir les formats en un format uniforme reconnaissable par le terminal,
le module de planification (24) comprend une unité de planification (242), conçue pour planifier les instructions de service converties en fonction d'une séquence de priorité prédéfinie ; et
le dispositif comprend en outre : un module de définition (52), connecté au module de planification, et conçu pour définir la séquence de priorité en fonction d'une condition de chargement de réseau et/ou d'un moment où les interfaces doivent être utilisées pour les instructions de service.

8. Dispositif selon la revendication 7, le dispositif comprenant en outre : un module de mise en antémémoire (32) connecté au module de conversion et au module de planification, conçu pour mettre en antémémoire les instructions de service converties.

9. Procédé selon la revendication 7 ou 8, dans lequel,
le module de définition (52) étant conçu pour définir une séquence de priorité en fonction d'une condition de chargement de réseau et/ou d'un moment où les interfaces doivent être utilisées pour les instructions de service comprend : la définition d'un niveau de priorité de l'instruction de service, pour lequel l'instruction correspondant à des données de service est stockée localement dans le terminal, pour être supérieur au niveau de priorité d'autres instructions de service.

10. Dispositif selon la revendication 9, dans lequel le module de conversion (22) est en outre conçu pour convertir le format des instructions de service converties en un format correspondant dans lequel l'interface communique en externe.

11. Procédé selon l'une quelconque des revendications 7 à 10, dans lequel le dispositif comprend en outre :
un module de stockage (62) connecté au module de planification, conçu pour stocker les données de service correspondant au traitement des instructions de service.

12. Programme informatique, comprenant des instructions de programme, dans lequel, lorsque les instructions de programme sont exécutées par un dispositif de traitement de services, le dispositif de traitement de services exécute le procédé selon l'une quelconque des revendications 1 à 6.

13. Support contenant le programme d'ordinateur selon la revendication 12.

14. Dispositif selon la revendication 9, dans lequel le module de définition étant conçu pour définir une séquence de priorité en fonction d'une condition de chargement de réseau et/ou d'un moment où les interfaces doivent être utilisées pour les instructions de service comprend en outre : la définition de l'instruction de service correspondant à l'interface à une vitesse de communication supérieure, à un niveau de priorité supérieur lorsqu'aucune des données de service correspondant aux instructions de service n'est stockée dans la zone du terminal.

15. Dispositif selon la revendication 14, dans lequel le module de définition étant conçu pour définir l'instruction de service correspondant à l'interface à une vitesse de communication supérieure, à un niveau de priorité supérieur comprend : la définition du niveau de priorité de l'instruction de service depuis le terminal comme étant supérieur au niveau de priorité d'une instruction de service coopérative provenant d'autres terminaux.
